# EUROPÄISCHE PATENTSCHRIFT

(11) **EP 2 846 091 B1**
(45) Veröffentlichungstag und Bekanntmachung des Hinweises auf die Patenterteilung: **15.03.2017**
(21) Anmeldenummer: 14003029.7
(22) Anmeldetag: 03.09.2014
(51) Int. Cl.: F23D 14/22, F23D 14/32, F23L 7/00, F23Q 7/10, F23Q 7/24

(54) **OXY-GAS BURNER WITH INCANDESCENT IGNITION**
OXY-GAS-BRENNER MIT GLÜHZÜNDUNG
BRÛLEUR À OXY-GÀZ AVEC ALLUMAGE À INCANDESCENCE

(30) Priorität: 03.09.2013 DE 102013014911
(43) Veröffentlichungstag der Anmeldung: 11.03.2015
(73) Patentinhaber: Messer Austria GmbH, 2352 Gumpoldskirchen (AT)
(72) Erfinder: Demuth, Martin, 2352 Gumpoldskirchen (AT); Potesser, Michael, 1020 Wien (AT)
(74) Vertreter: Münzel, Joachim R.

(56) Entgegenhaltungen:
- EP-A2- 0 427 033
- EP-A2- 2 359 928

## Beschreibung

Die Erfindung betrifft einen Brenner, der mit wenigstens einer Brennstoffzuführung und wenigstens einer Oxidationsmittelzuführung, die an einem Brennermund ausmünden, sowie mit einer Zündeinrichtung zum Zünden eines sich vor dem Brennermund bildenden Brennstoff/Oxidationsmittelgemisches ausgerüstet ist.

Bei derartigen Brennern, die als außenmischende Brenner bezeichnet werden und bei denen keine Mischkammern oder Flammenhalter vorgesehen sind, erfolgt die Zündung derzeit üblicherweise mittels einer Zündeinrichtung auf Funkenbasis, die im Mischbereich von Brennstoff und Oxidationsmittel, in der Regel unmittelbar vor der Ausmündung (dem "Brennermund") des Brenners in einen Brennraum, positioniert ist und bei der zwischen einer stromführenden Elektrode und dem geerdeten Brennergehäuse ein Zündfunke erzeugt wird. Ein Beispiel für einen Brenner mit einer derartigen Zündeinrichtung wird in der EP 0 363 787 A1 beschrieben. Die Zündeinrichtung muss dabei sehr exakt positioniert werden. So muss zwischen Elektrode und Brennergehäuse ein Abstand von ca. 1-2 mm eingehalten werden. Berühren sich die beiden Elemente, gibt es keinen Funken; ist der Abstand zu groß oder die Wegstrecke zwischen Elektrode und Brennergehäuse durch Verschmutzung versperrt, springt der Funke innerhalb des Brenners oder gar nicht über. Verschärft wird diese Problematik durch die Positionierung der Zündeinrichtung vor dem Brennermund, da dieser Bereich hohen Temperaturunterschieden ausgesetzt ist und überdies aus dem Brennraum heraus Schlackenspritzer auf den Brennermund auftreffen können. Zudem erfordert der Austausch oder die Wartung der Zündapparaturen nicht selten die Entnahme des kompletten Brenners. Besonders heikel ist die Situation bei Brennstoff-Sauerstoffbrennern, da diese aufgrund des fehlenden Stickstofftransports eine verhältnismäßig schlanke Bauform aufweisen, die die nicht nur die exakte Positionierung der Zündeinrichtung erschwert, sondern bei der zudem die am Brennermund angeordnete Zündapparatur den Gasfluss von Brennstoff und/oder Oxidationsmittel beeinflussen kann.

Der Erfindung liegt daher die Aufgabe zugrunde, die Zündung in einem Brenner für gasförmige und/oder flüssige Brennstoffe dahingehend zu verbessern, dass der Wartungsaufwand gegenüber Brennern nach dem Stande der Technik reduziert ist.

Diese Aufgabe wird durch einen Brenner mit den Merkmalen des Patentanspruchs 1 gelöst. Vorteilhafte Ausgestaltungen der Erfindung sind in den Unteransprüchen beansprucht.

Das Dokument EP0427033 A2 als nächstliegendster Stand der Technik beschreibt einen Brenner nach dem Oberbegriff des Anspruchs 1.

Der erfindungsgemäße Brenner zeichnet sich durch eine sogenannte Glühzündung aus, bei der die Zündeinrichtung mit einem Heizelement sowie mit Mitteln zum Zuführen von Oxidationsmittel an wenigstens eine Heizfläche des Heizelements ausgerüstet ist. Erfindungsgemäß wird die Zündung also nicht durch einen Funken ausgelöst, sondern ein Teilstrom zumindest eines Oxidationsmittels wird in thermischen Kontakt mit einer auf eine hohe Temperatur erhitzten Heizfläche gebracht, **dadurch** seinerseits aufgeheizt und anschließend mit einem Teilstr Brennstoffs Mediums vermischt. Bei der Heizfläche handelt es sich beispielsweise um eine Glühkerze oder eine Heizwendel, die durch Stromfluss beheizt und **dadurch** zum Glühen gebracht wird. Die Temperatur, auf die das Medium beim Kontakt mit der Heizfläche aufgeheizt wird, muss ausreichen, um bei der anschließenden Durchmischung beider Teilströme die Zündtemperatur des sich ergebenden Brennstoff/Oxidationsmittelgemisches zumindest lokal zu überschreiten. Beispielsweise wird das Medium auf eine Temperatur von über 900°C erhitzt. An den Stellen, an denen die Zündtemperatur überschritten wird, reagieren die Medien miteinander unter Ausbildung einer Flamme oder einzelner Flammen, die anschließend unter dem Druck der nachströmenden Teilströme in Form von Flammensträhnen zum Brennermund hinausgetragen werden und vor dem Brennermund das sich aus dem Hauptströmen von Brennstoff und Oxidationsmittel gebildete Brennstoff/Oxidationsmittelgemisch zünden, das in der Folge selbsttätig weiterbrennt. Die Erfindung vermeidet wesentliche Nachteile, die mit gängigen Funkenzündern verbunden sind; insbesondere ist weder eine exakte und dauerhaft gleichbleibende Positionierung einer Elektrode erforderlich, noch muss die Zündapparatur notwendigerweise im Bereich vor dem Brennermund Als Brennstoffe sind für den erfindungsgemäßen Brenner gasförmige Brennstoffe, wie beispielsweise Erdgas, ebenso geeignet wie zu einem Aerosol zerstäubte flüssige Brennstoffe oder fluidisierte Feststoffpartikel (Stäube). Als Oxidationsmittel kann Luft oder ein mit Sauerstoff angereichertes Gas zum Einsatz kommen, besonders bevorzugt eignet sich reiner Sauerstoff mit einer Sauerstoffkonzentration von über 90 Vol.-% Der Betrieb der Zündeinrichtung, also die Beaufschlagung der beheizten Heizfläche mit Oxidationsmittel und/oder Brennstoff ist/sind nur für die Zeit des Die der üblicherweise ist nicht länger Brennstoffzuführung angeordnet mit dem jeweils zu beheizenden Medium eine gewisse Zeitdau Oxidationsmittel Vorglühen der Heizfläche von beispielsweise bis zu 60 Sekunden vorgesehen sein.

Glühzünder sind an sich bereits aus Einrichtungen zum Zünden von festem Brennstoff bekannt. So wird in der EP 1 972 853 A1 eine Glühzündung beschrieben,

Die Zündeinrichtung ist In einer bevorzugten Ausführungsform der Erfindung umfasst die Zündeinrichtung ein innerhalb der Brennstoffzuführung angeordnetes, rohrförmiges Heizelement, das über eine Oxidationsmittelleitung mit der Oxidationsmittelzuführung strömungsverbunden ist und in dessen Innenraum die Heizfläche angeordnet ist. Bei dieser Ausführungsform der Erfindung wird also zumindest für die Zeit des Zündvorgangs ein Teilstrom des durch die Oxidationsmittelzuführung strömenden Oxidationsmittels über die Oxidationsmittelleitung in das rohrförmige Heizelement eingeleitet, in dem er durch den thermischen Kontakt mit der Heizfläche erhitzt wird, um anschließend am Austritt des rohrförmigen Heizelements mit zumindest einem Teilstrom des durch die Brennstoffzuführung strömenden gasförmigen Brennstoffs durchmischt Die Aufheizung des Oxidationsmittelteilstroms durch die Heizfläche muss dabei ausreichen, um das am Austritt des Heizelements gebildete Gemisch aus Oxidationsmittelteilstrom und dem mit diesem in Kontakt tretenden Teilstrom des Brennstoffs zu zünden. Das miteinander unter Ausbildung von einer oder mehreren Flammen reagierende Teilstromgemisch wird durch den Hauptstrom des in der Brennstoffzuführung strömenden Brennstoffs zum Brennermund hinausgetragen und entzündet das vor dem Brennermund vorliegende zündfähige Gemisch aus Brennstoff und Oxidationsmittel. Die rohrförmige Heizeinrichtung ist bevorzugt als im Wesentlichen zylinderförmiges Rohr ausgestaltet, das bevorzugt achsparallel, jedoch nicht notwendigerweise koaxial innerhalb der Brennstoffzuführung aufgenommen ist. Die Heizfläche umfasst insbesondere ein elektrisches Heizelement, beispielsweise eine innerhalb des rohrförmigen

Heizelements angeordnete Heizwendel, eine Glühkerze oder einen auf einen Träger gewickelten Heizleiter aus einem Material, das dauerhaft bei hohen Zündtemperaturen von beispielsweise 900°C bis 1200°C eingesetzt werden kann. Um beim Zündvorgang die Zufuhr von Oxidationsmittel durch die Oxidationsmittelleitung zu steuern, ist diese bevorzugt mit einem Steuerventil ausgerüstet.

Eine alternative Ausgestaltung des erfindungsgemäßen Heizelements sieht vor, dass die Zündeinrichtung ein innerhalb der Brennstoffzuführung angeordnetes, im wesentlichen zylinderförmiges Heizelement, auf dessen Mantelfläche die Heizfläche angeordnet ist, und eine mit der Oxidationsmittelzuführung strömungsverbundene Oxidationsmittelleitung umfasst, die mit wenigstens einer auf die Heizfläche gerichteten Düse strömungsverbunden ist. Bei dieser Ausgestaltung wird also ein Teilstrom des Oxidationsmittelstroms während des Zündvorgangs durch die Oxidationsmittelleitung hindurch zu einer oder mehreren Düsen geführt und durch diese auf die erhitzte Heizfläche ausgetragen. Beim Heizelement handelt es sich bevorzugt um ein elektrisches Heizelement, beispielsweise um eine Glühkerze. Da sich das Heizelement innerhalb der Brennstoffzuführung befindet, kommt es dabei bereits während oder vor dem Kontakt mit der Heizfläche zu einer Vermischung mit zumindest einem Teilstrom des umgebenden Brennstoffs. Auch hier ist die Oxidationsmittelleitung bevorzugt mit einem Steuerventil ausgerüstet, um nach Abschluss des Zündvorgangs die Zufuhr von Oxidationsmittel zu unterbinden.

Bevorzugt ist das Heizelement gegenüber dem Brennermund zurückgezogen angeordnet, um der hohen Hitzebelastung und der Verschmutzung mit Schlackespritzern während des laufenden Betriebs des Brenners zu entgehen. In den vorgenannten Ausführungsformen, bei denen das Heizelement innerhalb der Brennstoffzuführung angeordnet ist, befindet sich zwischen dem mündungsseitigen Endabschnitt des Heizelements und dem Brennermund ein axialer Abstand von vorzugsweise mindestens 10 cm, besonders bevorzugt von mindestens 20 cm.

Eine vorteilhafte Ausgestaltung des erfindungsgemäßen Brenners sieht vor, dass die Brennstoffzuführung und die Oxidationsmittelzuführung koaxial zueinander angeordnet sind. In diesem Fall ist die Zündeinrichtung beispielsweise innerhalb einer koaxial innen liegenden Brennstoffzuführung angeordnet und über eine mittels eines Ventils verschließbaren Teilstromzuführung mit der Oxidationsmittelzuführung derart strömungsverbunden, dass während der Zündphase ein Teilstrom des Oxidationsmittels über die Teilstromzuführung der Zündeinrichtung zugeführt wird.

Eine abermals vorteilhafte Ausführungsform der Erfindung sieht vor, dass innerhalb des Brennergehäuses eine von Oxidationsmittelzuführung und Brennstoffzuführung räumlich getrennte, jedoch strömungstechnisch mit diesen verbindbare Zuführung angeordnet ist, innerhalb der eine Heizeinrichtung angeordnet ist, die für die Dauer des Zündvorgangs mit einem Brennstoff/Oxidationsmittelgemisch beaufschlagt wird. In diesem Fall ist es gleichgültig, ob die Brennstoffzuführung und die Oxidationsmittelzuführung koaxial zueinander angeordnet sind oder nicht. Auch bei dieser Ausgestaltung ist die Heizeinrichtung bevorzugt um wenigstens 10 cm beabstandet von der Ausmündung in der Zuführung aufgenommen.

Zweckmäßigerweise umfasst die Zündeinrichtung ein elektrisch betriebenes Heizelement, Dabei handelt es sich beispielsweise um einen elektrischen Heizstab, eine Glühkerze eine elektrische Heizwendel, ein elektrischer Flachheizkörper, ein elektrischer Ringheizkörper oder einen auf einem keramischen Träger aufgebrachten elektrischen Heizleiterdraht. Das Heizelement sollte so gewählt sein, dass es dauerhaft für hohe Zündtemperaturen von beispielsweise 900°C bis 1200°C geeignet ist. Durch die hohe Temperatur wird das an der Heizfläche des Heizleiters, beispielsweise dem Glühstab einer Glühkerze, vorbeigeführte Medium so weit erhitzt, dass bei der gleichzeitigen oder nachfolgenden Durchmischung mit dem jeweils anderen Medium die Zündtemperatur des Gemisches von beispielsweise 640°C (Erdgas/Luft) zumindest lokal überschritten wird.

Grundsätzlich ist die Erfindung sowohl für Brenner geeignet, die mit Luft als Oxidationsmittel arbeiten, wie auch für Brenner, die dazu Sauerstoff einsetzen. Besonders vorteilhaft erweist sich ein erfindungsgemäßer Brennstoff-/Sauerstoffbrenner, bei dem wenigstens eine Oxidationsmittelzuführung als Sauerstoffzuführung ausgebildet und mit einer Quelle für reinen Sauerstoff (mit einem Sauerstoffanteil von >90 Vol.-%) strömungsverbunden ist. Bei derartigen Brennern sind die mit Funkenzündern verbundenen Probleme wegen der infolge des fehlenden Stickstofftransports im Vergleich zu Brennstoff/Luft-Brennern geringeren Baugröße besonders augenfällig, sodass die Vorteile des erfindungsgemäßen Brenners besonders deutlich zum Tragen kommen.

Anhand der Zeichnungen sollen nachfolgend Ausführungsbeispiele der Erfindung näher erläutert werden. In schematischen Ansichten zeigen:
Beim Betrieb des Brenners 1 wird Brennstoff durch die Brennstoffzuführung 4 und Oxidationsmittel durch die Oxidationsmittelzuführung 8 geleitet. Der Brennstoffstrom durchläuft den Brennstoffkanal 6 und strömt am Brennermund 3 in den Brennraum ein, wo er sich mit dem durch den Oxidationsmittelkanal 9 geführten Oxidationsmittelstrom zu einem zündfähigen Gemisch vermischt. Zur Zündung dieses Brennstoff/Oxidationsmittelgemischs wird die Heizschlange 1, 6 5 durch Anschließen der Stromversorgung 18 elektrisch auf e, 9 ine hohe Temperatur von beispielsweise 900°C bis 1200°C beheizt. Gleichzeitig wird das Steuerventil14 geöffnet, woraufhin ein Teilstrom des Oxidationsmittels durch die Oxidationsmittelleitung 13 und von dort durch das Heizelement 12 hindurch strömt. Am Austritt 19 des Heizelements 12 vermischt sich der beheizte Oxidationsmittelteilstrom mit zumindest einem Teilstrom des durch den Brennstoffkanal 6 geleiteten Brennstoffs. Die Temperatur, auf die der Oxidationsmittelteilstrom durch den Kontakt mit der Heizschlange 15 beheizt wird, wird dabei so gewählt, dass sie ausreicht, damit zumindest ein Teil des sich vor dem Austritt 19 des Heizelements bildenden Brennstoff/Oxidationsmittelgemischs spontan zündet. Aus Zeitersparnis kann gegebenenfalls eine Vorheizung der Heizschlange 15 erfolgen, damit beim Durchtritt des Oxidationsmittelteilstroms bereits die erforderliche Zündtemperatur erreicht ist. Durch die Reaktion des Brennstoffs mit dem Oxidationsmittel bilden sich Flammensträhnen, die durch den Druck des nachfolgenden Brennstoffs zum Brennermund 3 hinausgetragen werden und das das dort vorliegende Gemisch aus den Hauptströmen von Brennstoff und Oxidationsmittel zünden. Nach erfolgter Zündung brennt dieses Gemisch selbsttätig weiter. Nach Abschluss des Zündvorgangs wird die Stromversorgung 18 der Heizschlange 15 unterbrochen und das Steuerventil 14 geschlossen.

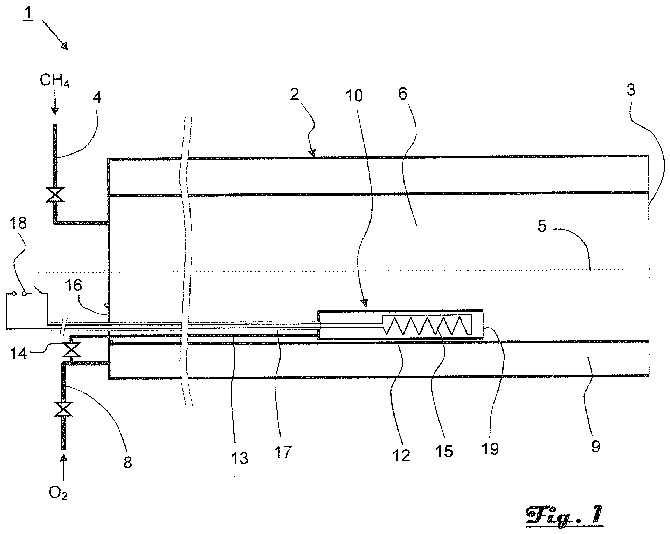

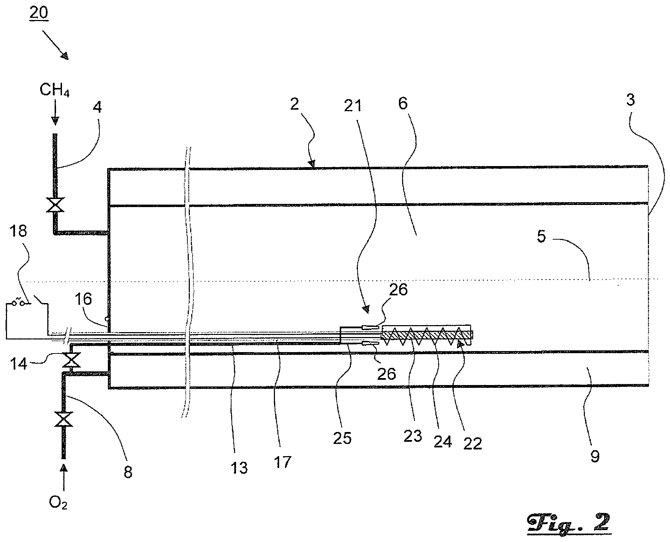

Der in Fig. 2 dargestellte Brenner 20 unterscheidet sich vom Brenner 1 lediglich in Details der Zündeinrichtung. Die Zündeinrichtung 21 des Brenners 20 umfasst ein Heizelement 22, bei dem es sich im Ausführungsbeispiel um einen vorzugsweise aus Keramik aufgebauten, zylinderförmigen Träger 23 handelt, der von einer elektrisch leitenden Heizfläche, beispielsweise einer Heizschlange 24 umwickelt ist. Alternativ kann jedoch auch eine anderes, auf seiner Außenfläche beheizbares Heizelement zum Einsatz kommen, beispielsweise eine Glühkerze oder ein Glühstift. Weiterhin mündet die Oxidationsmittelleitung 13 in einer Düsenanordnung 25 aus, die mehrere Düsen 26 umfasst, die beispielsweise radial beabstandet vom zylinderförmigen Träger 23 in gleichen Winkelabständen angeordnet und jeweils auf die Heizschlange 24 gerichtet sind.

Zur Zündung des Brenners 20 wird die Heizschlange 24 durch Anschließen der Stromversorgung 18 beheizt. Anschließend wird Oxidationsmittel durch die Oxidationsmittelleitung 13 geleitet und strömt an den Düsen 26 in Richtung auf die Heizschlange 24 aus. Gleichzeitig durchmischt sich das Oxidationsmittel dort mit einem Teilstrom aus dem umgebenden, durch die Brennstoffzuführung 4, 6 geleiteten Brennstoffs zu einem zündfähigen Gemisch. Die Heizschlange 24 wird dabei derart beheizt, dass die Zündtemperatur dieses Gemisches erreicht oder überschritten wird, d.h. die Bestandteile des Gemisches beginnen, zumindest lokal im unmittelbaren Umfeld des Heizelements 22, miteinander zu reagieren. Durch die Reaktion bilden sich Flammensträhnen, die durch den Druck des nachfolgenden Brennstoffstroms zum Brennermund 3 hinausgetragen werden und das dort vorliegende Gemisch aus den Hauptströmen von Brennstoff und des Oxidationsmittel zünden. Auch die Zündeinrichtung 21 ist innerhalb des Brennstoffkanals 6 axial beabstandet vom Brennermund 3 aufgenommen, um Beschädigungen der Zündeinrichtung infolge Hitzeeinwirkung oder durch Schlackenspritzer zu vermeiden.

Im Rahmen der Erfindung ist es im Übrigen auch möglich, die Bauweisen der hier dargestellten Zündeinrichtungen 10, 21 miteinander zu kombinieren und einen Oxidationsmittelteilstrom sowohl an einer in einer röhrenförmigen Heizeinrichtung angeordneten Heizfläche, als auch an einer an der Außenwand der Heizeinrichtung angeordneten Heizfläche zu beheizen.

### Bezugszeichenliste:

- 1.: Brenner
- 2.: Brennergehäuse
- 3.: Brennermund
- 4.: Brennstoffzuführung
- 5.: Brennerachse
- 6.: Brennstoffkanal
- 8.: Oxidationsmittelzuführung
- 9.: Oxidationsmittelkanal
- 10.: Zündeinrichtung
- 12.: Heizelement
- 13.: Oxidationsmittelleitung
- 14.: Steuerventil
- 15.: Heizschlange
- 16.: Wartungsklappe
- 17.: Kabel
- 18.: Stromversorgung
- 19.: Austritt
- 20.: Brenner
- 21.: Zündeinrichtung
- 22.: Heizelement
- 23.: Träger
- 24.: Heizschlange
- 25.: Düsenanordnung
- 26.: Düse

## Patentansprüche

1. Brenner, der mit wenigstens einer Brennstoffzuführung (4, 6) und wenigstens einer Oxidationsmittelzuführung (8, 9), die an einem Brennermund (3) ausmünden, sowie mit einer Zündeinrichtung (10, 21) zum Zünden eines sich vor dem Brennermund (3) bildenden Brennstoff/ Oxidationsmittelgemisches ausgerüstet ist, wobei die Zündeinrichtung (10, 21) mit einem Heizelement (12, 22) sowie mit Mitteln zum Zuführen von Oxidationsmittel an wenigstens eine Heizfläche (15, 24) des Heizelements (12) ausgerüstet ist,
**dadurch gekennzeichnet,**
**dass** die Zündeinrichtung (10, 21) ein innerhalb der wenigstens einen Brennstoffzuführung (4, 6) angeordnetes, rohrförmiges Heizelement (12, 22) aufweist, das über eine Oxidationsmittelleitung (13) mit der wenigstens einen
Oxidationsmittelzuführung (8, 9) strömungsverbunden ist und in dessen Innenraum die Heizfläche (15) angeordnet ist und/oder
**dass** die Zündeinrichtung (10, 21) einen innerhalb der wenigstens einen Brennstoffzuführung (4, 6) angeordneten, im wesentlichen zylinderförmigen Träger (23), auf dessen Mantelfläche die Heizfläche (24) angeordnet ist, und eine mit der wenigstens einen Oxidationsmittelzuführung (8, 9) strömungsverbundene Oxidationsmittelleitung (13) umfasst, die mit wenigstens einer auf die Heizfläche (24) gerichteten Düse (26) ausgerüstet ist.

2. Brenner nach Anspruch 1, **dadurch gekennzeichnet, dass** das Heizelement (12, 22) der Zündeinrichtung (10, 21) in einer von Brennstoffzuführung (4, 6) und Oxidationsmittelzuführung (8, 9) separaten Zuführung angeordnet ist, die mit der wenigstens einen Brennstoffzuführung (4, 6) und der wenigstens einen Oxidationsmittelzuführung (8, 9) strömungsverbunden ist.

3. Brenner nach Anspruch 1 oder 2, **dadurch gekennzeichnet, dass** das Heizelement (12, 22) zurückgezogen, mit seinem dem Brennermund (3) zugewandten Endabschnitt um wenigstens 10 cm axial beabstandet vom Brennermund (3) innerhalb der wenigstens einen Brennstoffzuführung (4, 6) angeordnet ist.

4. Brenner nach einem der vorhergehenden Ansprüche, **dadurch gekennzeichnet, dass** die wenigstens eine Brennstoffzuführung (4, 6) und die wenigstens eine Oxidationsmittelzuführung (8, 9) zumindest auf ihren dem Brennermund (3) zugewandten Endabschnitten (6, 9) koaxial zueinander angeordnet sind.

5. Brenner nach einem der vorhergehenden Ansprüche, **dadurch gekennzeichnet, dass** das Heizelement (12, 22) der Zündeinrichtung (10, 21) elektrisch beheizbar ist.

6. Brenner nach einem der vorhergehenden Ansprüche, **gekennzeichnet durch** die Ausführung als Brennstoff-Sauerstoff-Brenner.

## Claims

1. Burner which is equipped with at least one fuel supply (4, 6) and at least one oxidant supply (8, 9), which open out at a burner mouth (3), and with an ignition device (10, 21) for igniting a fuel/oxidant mixture that forms upstream of the burner mouth (3), wherein the
ignition device (10, 21) is equipped with a heating element (12, 22) and with means for supplying oxidant onto at least one heating surface (15, 24) of the heating element (12),
**characterized**
**in that** the ignition device (10, 21) has a tubular heating element (12, 22) which is arranged within the at least one fuel supply (4, 6) and which is connected in terms of flow via an oxidant line (13) to the at least one oxidant supply (8, 9) and in the interior space of which the heating surface (15) is arranged, and/or
**in that** the ignition device (10, 20) comprises a substantially cylindrical support (23) which is arranged within the at least one fuel supply (4, 6) and on the shell surface of which the heating surface (24) is arranged, and an oxidant line (13) which is connected in terms of flow to the at least one oxidant supply (8, 9) and which is equipped with at least one nozzle (26) directed toward the heating surface (24).

2. Burner according to Claim 1, **characterized in that** the heating element (12, 22) of the ignition device (10, 21) is arranged in a supply which is separate from fuel supply (4, 6) and oxidant supply (8, 9), which supply is connected in terms of flow to the at least one fuel supply (4, 6) and to the at least one oxidant supply (8, 9).

3. Burner according to Claim 1 or 2, **characterized in that** the heating element (12, 22) is arranged within the at least one fuel supply (4, 6) so as to be set back with its end section, which faces toward the burner mouth (3), spaced apart axially from the burner mouth (3) by at least 10 cm.

4. Burner according to one of the preceding claims, **characterized in that** the at least one fuel supply (4, 6) and the at least one oxidant supply (8, 9) are arranged coaxially with respect to one another at least at their end sections (6, 9) facing toward the burner mouth (3).

5. Burner according to one of the preceding claims, **characterized in that** the heating element (12, 22) of the ignition device (10, 21) is electrically heatable.

6. Burner according to one of the preceding claims, **characterized by** the embodiment as a fuel-oxygen burner.

## Revendications

1. Brûleur, qui est équipé d'au moins une arrivée de combustible (4, 6) et d'au moins une arrivée d'agent oxydant (8, 9), qui débouchent à une gueule de brûleur (3), ainsi qu'avec un système d'allumage (10, 21) pour l'allumage d'un mélange combustible/agent oxydant qui se forme devant la gueule de brûleur (3), dans lequel le dispositif d'allumage (10, 21) est équipé d'un élément chauffant (12, 22) ainsi que de moyens pour envoyer de l'agent oxydant à au moins une face chauffante (15, 24) de l'élément chauffant (12), **caractérisé en ce que** le dispositif d'allumage (10, 21) présente un élément chauffant tubulaire (12, 22) disposé à l'intérieur de ladite au moins une arrivée de combustible (4, 6), qui est raccordé en écoulement à ladite au moins une arrivée d'agent oxydant (8, 9) par une conduite d'agent oxydant (13) et dans l'espace intérieur duquel la face chauffante (15) est disposée et/ou **en ce que** le dispositif d'allumage (10, 21) comprend un support essentiellement cylindrique (23), disposé à l'intérieur de ladite au moins une arrivée de combustible (4, 6), sur la surface latérale duquel la face chauffante (24) est disposée, et une conduite d'agent oxydant (13) raccordée en écoulement à ladite au moins une arrivée d'agent oxydant (8,9), qui est équipée d'au moins une buse (26) dirigée vers la face chauffante (24).

2. Brûleur selon la revendication 1, **caractérisé en ce que** l'élément chauffant (12, 22) du dispositif d'allumage (10, 21) est disposé dans une arrivée séparée de l'arrivée de combustible (4, 6) et de l'arrivée d'agent oxydant (8, 9), qui est raccordée en écoulement à ladite au moins une arrivée de combustible (4, 6) et à ladite au moins une arrivée d'agent oxydant (8, 9).

3. Brûleur selon la revendication 1 ou 2, **caractérisé en ce que** l'élément chauffant (12, 22) est disposé en retrait, avec sa partie d'extrémité tournée vers la gueule de brûleur (3) située axialement à une distance d'au moins 10 cm de la gueule de brûleur (3) à l'intérieur de ladite au moins une arrivée de combustible (4, 6).

4. Brûleur selon l'une quelconque des revendications précédentes, **caractérisé en ce que** ladite au moins une arrivée de combustible (4, 6) et ladite au moins une arrivée d'agent oxydant (8, 9) sont disposées de façon coaxiale l'une à l'autre au moins dans leurs parties d'extrémité (6, 9) tournées vers la gueule de brûleur (3).

5. Brûleur selon l'une quelconque des revendications précédentes, **caractérisé en ce que** l'élément chauffant (12, 22) du dispositif d'allumage (10, 21) peut être chauffé électriquement.

6. Brûleur selon l'une quelconque des revendications précédentes, **caractérisé par** son exécution comme brûleur à combustible-oxygène.
